# EUROPÄISCHE PATENTSCHRIFT

(11) **EP 3 603 465 B1**
(45) Veröffentlichungstag und Bekanntmachung des Hinweises auf die Patenterteilung: **24.03.2021**
(21) Anmeldenummer: 19174601.5
(22) Anmeldetag: 15.05.2019
(51) Int. Cl.: A47J 36/24

(54) **BABYKOSTWÄRMER**
BABY FOOD HEATER
DISPOSITIF DE CHAUFFAGE D'ALIMENTS POUR NOURRISSONS

(30) Priorität: 30.07.2018 DE 102018118386
(43) Veröffentlichungstag der Anmeldung: 05.02.2020
(73) Patentinhaber: Reer GmbH, 71229 Leonberg (DE)
(72) Erfinder: Müller, Steffen, 74722 Buchen (DE)
(74) Vertreter: Geitz Truckenmüller Lucht Christ

(56) Entgegenhaltungen:
- DE-U1- 29 916 569
- DE-U1-202016 001 827
- JP-A- H0 835 664

## Beschreibung

Die vorliegende Erfindung betrifft einen Babykostwärmer umfassend einen Becher mit einer Induktionsspule zur Erzeugung eines Magnetfelds in dem Becher sowie mit einem in dem Becher drehbar aufgenommenen Rührelement zum gleichzeitigen Durchmischen und Erwärmen eines in dem Becher aufgenommenen Medienbehälters mit einem flüssigen oder pastösen Medium, wobei das Rührelement induktiv sowohl beheizt als auch in Rotation versetzt wird.

Eine derartige Lösung ist bereits aus der WO 2009/092885 A2 vorbekannt. Gegenstand dieses Schutzrechts ist ein Flaschenwärmer, bei dem eine Heizspannung induktiv auf ein Heizelement übertragen wird, wobei es sich bei dem Heizelement um ein kreuzförmiges, magnetisches Rührelement handelt. Dieses wird in die Flasche verbracht und dient sowohl dazu, aufgrund einer Rotation, die über ein durch eine Bodenspule des Flaschenwärmers erregtes Drehfeld bewirkt wird, als auch aufgrund der sich damit einstellenden induktiven Aufheizung den Flascheninhalt gleichzeitig zu durchmischen und zu erhitzen.

Hierbei bestehen allerdings einige Nachteile. Zum einen verbleibt das magnetische Rührelement in der Flasche und wird bei einem Umdrehen der Flasche gegen den dann nach unten gekehrten Flaschenhals fallen. Gegebenenfalls erschwert oder blockiert das Rührelement den Ausstrom der Flaschenkost aus der Flasche. In jedem Fall kann es aber erst zurückgewonnen werden, wenn die Flasche leer ist.

Ferner besteht das Problem, dass das Rührelement auf dem Flaschenboden zum Liegen kommt und gegen die Reibung am Boden in Rotation versetzt werden muss. Dies bedeutet, dass nur ein recht kleines Rührelement eingesetzt werden kann, welches auch so leicht sein muss, dass es ohne Weiteres durch das Medium in der Flasche bewegt werden kann. Diese Anforderung verträgt sich aber nur schlecht mit einer zweiten Anforderung an das Rührelement, wonach dieses auch möglichst schnell den Inhalt der Flasche erwärmen muss. Dies erfordert jedoch ein großes Induktionselement, welches viel Energie in Wärme umsetzen und über eine große Oberfläche nach außen abgeben kann. Mit einer zu großen Oberfläche und Größe wird das Rührelement aber zu groß, um sich am Boden der Flasche frei zu drehen. Eine genügende Rotation ist jedoch erforderlich, um eine ausreichende Verteilung der nur lokal am Boden entstehenden Hitze zu erreichen.

Ferner ist aus der DE 199 45 498 C2 ein weiterer Babykostwärmer bekannt, welcher aber das Rührelement lediglich für eine Durchmischung des Gefäßinhalts verwendet. Dort ist es vorgesehen, eine Manschette mit einem induktiv erwärmten Heizelement um das dort zu erwärmende Gefäß zu legen, welche durch den Kontakt das Gefäß und mit diesem den Inhalt des Gefäßes erwärmt. Alternativ kann die Manschette auch direkt in das Gefäß integriert werden.

Hierbei besteht aber das Problem, dass entweder nur ein Spezialgefäß eingesetzt werden kann, oder aber das Gefäß mit erwärmt werden muss, was einen unnötig hohen Energieverbrauch bedeutet. Zudem ist zwangsläufig nach dem Erwärmungsvorgang das Gefäß wärmer als der Inhalt, so dass neben einer nur sehr unvollständigen Energieeinkopplung auch nur eine eingeschränkte Möglichkeit besteht, die Wärme des Gefäßinhalts zu bestimmen, was gerade bei Babykost aber sehr wichtig wäre.

Vor diesem Hintergrund liegt der vorliegenden Erfindung die Aufgabe zu Grunde, einen Babykostwärmer vorzuschlagen, welcher eine effiziente und schnelle Durchmischung sowie Erwärmung des in einem Medienbehälter aufgenommenen Mediums, insbesondere Babykost, ermöglicht.

Gelöst wird diese Aufgabe durch einen Babykostwärmer gemäß den Merkmalen des Anspruchs 1. Weitere, sinnvolle Ausgestaltungen eines solchen Babykostwärmers können den sich anschließenden abhängigen Ansprüchen entnommen werden.

Erfindungsgemäß ist es vorgesehen, dass ein Babykostwärmer einen Becher aufweist, in den ein Medienbehälter mit Babynahrung eingestellt wird. Der Becher weist wenigstens eine Induktionsspule auf, mit welchem ein Magnetfeld zur Beeinflussung eines Rührelements erzeugt werden kann, welches das Rührelement zu einer Aufheizung anregt. Auch die Rotation des Rührelements kann über dieselbe oder eine separate Induktionsspule induktiv bewirkt werden, sowie in einer einfacheren Ausgestaltungsform über einen oder mehrere rotierende Permanentmagnete. Hierbei ist das Rührelement jedoch anders als im Stand der Technik gegenüber dem Boden des Bechers, aber auch gegenüber dem Boden des Medienbehälters, beabstandet, nämlich erhöht, gelagert, so dass die Reibung des Rührelements am Boden des Medienbehälters die Rotation nicht abbremst. Gleichzeitig erlaubt die erhöhte Lagerung des Rührelements auch eine Abgabe der induktiv in dem Rührelement erzeugten Wärme in einem höheren Bereich des Medienbehälters, so dass eine zentralere Ausbreitung von dem Rührelement aus in alle Richtungen erfolgen kann. Nachdem aufgrund der wegfallenden Reibung am Boden des Medienbehälters auch die Größe des Rührelements und sein Gewicht nur mehr eine untergeordnete Rolle spielen, können in dem Rührelement integrierte Induktionselemente so groß ausgestaltet werden, dass eine gleichermaßen starke Wärme- und Krafteinkopplung erreicht werden kann. Dies sorgt für eine schnellere Erwärmung bei einer gleichmäßigen Durchmischung des in dem Medienbehälter enthaltenen Mediums.

In einer ersten konkreten Ausgestaltung des Babykostwärmers kann das Rührelement über einen Trägerstab von einem Deckelelement herab in den Medienbehälter eingehängt werden, so dass beispielsweise das Rührelement etwa im Bereich des Schwerpunkts des Medienbehälters angeordnet ist. Um die Drehbarkeit des Rührelements sicherzustellen, soll das Rührelement gegenüber dem Deckelelement drehbar gelagert sein. Dies kann auf unterschiedliche Art und Weise erfolgen, insbesondere dadurch, dass der Trägerstab ein Drehlager aufweist, mit dem er dem Deckelelement anverbunden ist, so dass sich bei einer Drehung des Rührelements auch der Trägerstab mitdreht. In einer ersten, bevorzugten Alternative kann aber auch das Rührelement ein Drehlager aufweisen, mit dem es dem Trägerstab anverbunden ist. Dann dreht sich lediglich das Rührelement, während der Trägerstab ruhig hängt. Eine Zwischenlösung könnte vorsehen, dass der Trägerstab mehrteilig gebildet ist und zwischen wenigstens zwei Teilen ein Drehlager besitzt, so dass ein Teil des Trägerstabs sich mit dem Rührelement dreht, während ein anderer Teil des Trägerstabs mit dem Deckelelement in Ruhe bleibt. Auf diese Weise kann das Rührelement nach einer Erwärmung des in dem Medienbehälter enthaltenen Mediums durch einfaches Herausnehmen entfernt werden und muss nicht erst nach dem Entleeren oder anderweitig zwischendurch wiedergewonnen werden wie dies im Stand der Technik der Fall ist.

Dabei kann dem Deckelelement eine Zentralbohrung zugeordnet sein, durch welche hindurch der Trägerstab geführt und durch eine Verliersicherung gesichert ist. Das Deckelelement wird dann einfach auf den offenen Rand des Medienbehälters aufgelegt und der Trägerstab hängt von dem Deckelement herab mit dem Rührelement in dem Medienbehälter. Durch die Verliersicherung, welche durch eine Abkantung, Verdickung oder ähnliche Verformung, welche die Zentralbohrung nicht passieren kann, gebildet sein kann, ist damit das Deckelement mit dem Trägerstab und dem Rührelement zu einer untrennbaren Einheit verbunden. Sofern die Verliersicherung von dem Trägerstab getrennt oder anderweitig geöffnet werden kann, kann auch das Deckelelement von dem Rest getrennt werden.

Dem Trägerstab können, soweit er vorhanden ist, entlang seiner Längsausdehnung ein oder mehrere Rastelemente, vorzugsweise in Form von Rastnuten, zugeordnet sein. Hierdurch kann das Rührelement durch Ziehen an dem Trägerstab weiter aus dem Medienbehälter herausgezogen oder tiefer in diesen hineingeschoben werden, so dass das Rührelement an einer gewünschten Stelle verbleiben kann. Die Rastelemente, die mit Gegenrastelementen im Bereich der wahlweise mittig oder exzentrisch angeordneten Zentralbohrung des Deckelelements zusammenwirken, können dabei als eine Verengung ausgebildet sein, in welche die etwa als Rastnuten ausgestalteten Rastelemente eingreifen können. Hierdurch kann das Rührelement in einer vordefinierten Höhe festgelegt werden. Durch eine Verteilung mehrerer Rastelemente, vorzugsweise Rastnuten, über die Länge des Trägerstabs können so verschiedene bevorzugte Höhenlagen des Trägerstabs und des damit verbundenen Rührelementes vorgegeben werden. Für eine solche Verklemmung eignet sich als Werkstoff für den Trägerstab Silikon oder ein anderes Elastomer, welches sowohl elastisch als auch haltbar und lebensmittelunbedenklich ist. Zudem ist es weich genug, um über einen gewissen Verformungswiderstand hinweg die Rastnuten aus einem Eingriff der auf den Umfang des Rastnutengrunds verengten Zentralbohrung herausgeschoben oder gezogen zu werden.

Das Deckelelement als solches ist nicht Teil des Medienbehälters, sondern vielmehr des Babykostwärmers. Dennoch wird er so ausgestaltet, dass er auf den Medienbehälter sicher aufgesetzt werden kann. Hierzu kann der Babykostwärmer auf seiner bestimmungsgemäß dem Medienbehälter zugewandten Seite eine Mehrzahl konzentrischer Randkanten aufweisen, welche eine Verklemmung in einem Rand eines Medienbehälters korrespondierender Größe erlauben. Um mit einem gemeinsamen Deckelelement also mehrere Größen von Medienbehältern abbilden zu können, werden also auch mehrere Randkanten an dem Deckelelement vorgesehen, welche aber um die gleiche Zentralbohrung herum angeordnet sind.

Eine alternative Ausgestaltung des Rührelements sieht hingegen vor, dass das Rührelement nicht von einem Deckelement herabhängt, sondern vielmehr umgekehrt auf einem Standfuß aufgestellt ist, welcher auf dem Boden des Medienbehälters platziert werden kann. Dem Standfuß ist dann ebenfalls ein Trägerstab zugeordnet, an welchem das eigentliche Rührelement drehbar gelagert angebracht ist. Hierbei kann praktischerweise der Standfuß als Saugnapf ausgestaltet sein, so dass er am Boden des Medienbehälters befestigt werden kann. Vorzugsweise kann ferner der Trägerstab an seinem freien Ende in ein Griffelement auslaufen, so dass das Rührelement als Ganzes über dieses Griffelement in dem Medienbehälter platziert und wieder aus diesem herausgenommen werden kann.

Um die eigentliche Erwärmung des Inhalts des im Becher aufgenommenen Medienbehälters leisten zu können, muss das Rührelement in einem induktiv erzeugten, veränderlichen Magnetfeld platziert werden. Hierzu sieht die Erfindung vor, dass wenigstens eine Heizinduktionsspule im Bereich des Becherbodens, vorzugsweise im Becherboden selbst, angeordnet ist. Hierdurch kann das für die Erhitzung des Rührelement vorgesehene Magnetfeld sich von unten nach oben in dem Becher ausbreiten und steht für die Erhitzung der Induktionselemente des Rührelements vollständig zur Verfügung.

Zur Erzeugung hingegen der Rotation des Rührelements ist im Bereich der Becherwände des Bechers eine Mehrzahl von Rotationsinduktionsspulen angeordnet. Diese Spulen sind rund um das Rührelement angeordnet und werden reihum betrieben, um durch ein solchermaßen erzeugtes Drehfeld eine Rotation des Rührelements zu bewirken.

Während eine solche Rotation bereits von zwei, mit größerer Sicherheit von drei, Induktionsspulen bewirkt werden kann, ist es doch möglich, weitere Rotationsinduktionsspulen vorzusehen. Vorzugsweise jedoch werden drei im Winkel von 120° zueinander etwa um eine Becherinnenwand herum angeordnete Induktionsspulen eingesetzt. Der Einsatz von drei Rotationsinduktionsspulen stellt es sicher, dass die Rotation in jeder Drehposition selbst eines zweipoligen Rührelements aus jeder Position heraus gestartet werden kann.

Als Rührelement ist es konkret möglich, einen Kunststoffkörper aus einem lebensmittelechten Kunststoff einzusetzen und darin rings um den Umfang des Kunststoffkörpers verteilte ferromagnetische Induktionselemente anzuordnen. Bedarfsweise ist es jedoch auch möglich, zusätzlich neben diesen vorzugsweise rotationssymmetrisch angeordneten Induktionselementen weitere Induktionselemente, insbesondere in besonders vorteilhafter Ausrichtung für ein vom Boden des Bechers ausgehendes Induktionsfeld, speziell als Heiz-Induktionselemente ausgeprägte Induktionselemente vorzusehen.

Alternativ hierzu sieht eine weitere Variante der Erfindung vor, das Rührelement als Flügelrad auszugestalten. Hierzu weist das Rührelement einen Außenring auf, der mit dem Trägerstab über wenigstens einen, vorzugsweise aber mehrere, Flügel mit einem Drehlager verbunden ist, das auf dem Trägerstab gleitet. Hierbei kann das Drehlager wiederum auf dem Trägerstab höhenverstellbar angeordnet sein, ist aber von einem korrespondierenden Widerlager des Trägerstabs in einer gewählten Höhe fixierbar.

Die vorstehend beschriebene Erfindung wird im Folgenden anhand eines Ausführungsbeispiels näher erläutert.

Es zeigen
- Figur 1: ein Rührelement mit einem Trägerstab zwischen den Induktionselementen des erfindungsgemäßen Babykostwärmers in einer perspektivischen Ansicht von schräg oben mit ausgeblendetem Becher und Deckelelement,
- Figur 2: das Rührelement mit Trägerstab gemäß Figur 1 mit zugeordnetem Deckelelement in Freistellung, in perspektivischer Darstellung von schräg vorne,
- Figur 3: das Rührelement mit Trägerstab und Deckelelement gemäß Figur 2 nach Einführung in einen transparenten Medienbehälter, in perspektivischer Darstellung von schräg vorne,
- Figur 4: das Rührelement in dem Medienbehälter gemäß Figur 3, zwischen den Induktionselementen des erfindungsgemäßen Babykostwärmers in einer perspektivischen Ansicht von schräg oben mit ausgeblendetem Becher,
- Figur 5: ein alternatives Rührelement mit einem Flügelrad in einer perspektivischen Darstellung von vorne, sowie
- Figur 6: ein Detail des alternativen Rührelements gemäß Figur 5 in einer perspektivischen Darstellung von schräg oben.

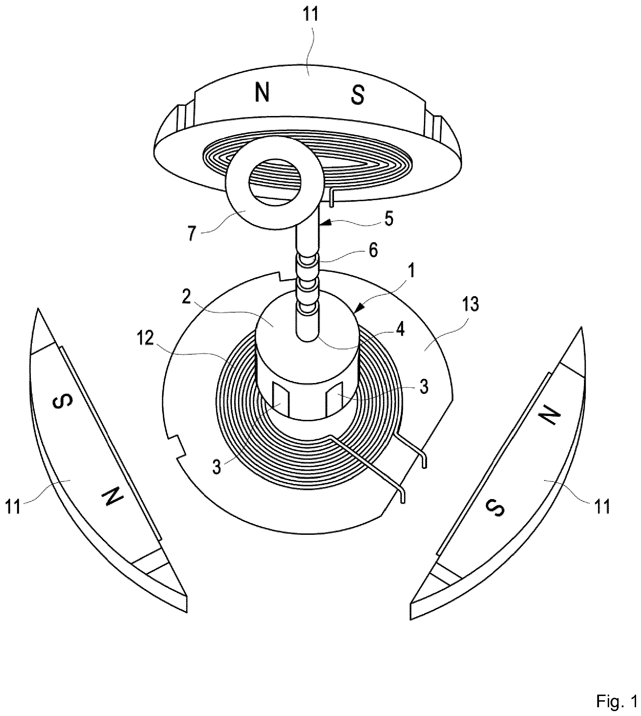

Figur 1 zeigt ein Rührelement 1, welches an einem Trägerstab 5 aufgehängt ist. Das Rührelement 1 besteht hierbei im Wesentlichen aus einem über ein Drehlager 4 mit dem Trägerstab 5 verbundenen Kunststoffkörper 2, in den eine Reihe gleichmäßig über den Umfang des Kunststoffkörpers 2 verteilter Induktionselemente 3, also Formkörper aus ferromagnetischem Material, eingebettet sind. Das Rührelement 1 ist bestimmungsgemäß über den Trägerstab 5 mit einem Deckelelement 8 zu verbinden, welches aber der Übersicht halber in Figur 1 nicht eingezeichnet ist.

Das Rührelement 1 wird zum einen durch ein induktiv erzeugtes Magnetfeld zu beheizen, welches von einer im Boden 13 eines hier ausgeblendeten Bechers angeordneten Heizinduktionsspule 12 induziert wird. Somit dient das Rührelement 1 gleichzeitig als Heizelement. Die Rotation des über das Drehlager 4 frei rotierbaren Rührelements 1 wird aber über um den Umfang des Rührelements 1 herum in einer Becherwand des erwähnten, wenngleich ausgeblendeten Bechers angeordneten Rotationsinduktionsspulen 11 bewirkt, welche durch phasenverschobenes Ein- und Ausschalten ein veränderliches und hierbei drehendes Magnetfeld zwischen sich erzeugen. Hierdurch wird das Rührelement 1 aufgrund des in diesem Drehfeld auf seine Induktionselemente 3 wirkenden Drehmoments in Rotation versetzt und kann ein Medium, in das es bestimmungsgemäß eingetaucht ist, umrühren und von innen heraus beheizen.

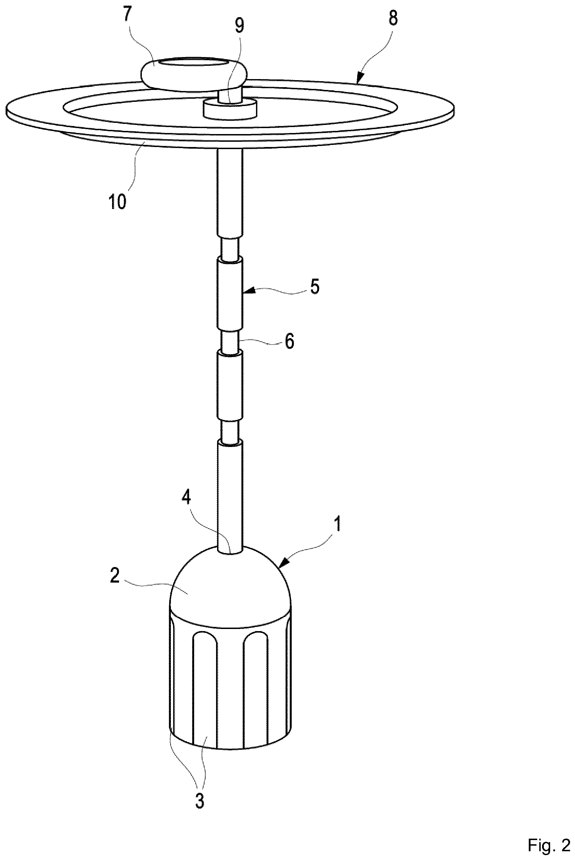

Wie in Figur 2 gezeigt, weist der Trägerstab 5 mehrere Rastnuten 6 auf, mit welchen der Trägerstab 5 in unterschiedlichen Höhenlagen in einer Zentralbohrung 9 eines Deckelelements 8, das nun in der Figur 2 eingeblendet ist, festgesetzt werden kann. Hierdurch kann die Anordnung aus Rührelement 1, Trägerstab 5 und Deckelelement 8 auf verschiedene Höhenniveaus und damit verschiedene Behältergrößen des später noch gezeigten Medienbehälters 14 eingestellt werden. Über eine Verliersicherung 7, hier ausgeführt als abgewinkelter Greifring, kann einerseits ein Herabfallen des ganz ausgefahrenen Rührelements 1 von dem Deckelelement 8 verhindert werden weil dieser nicht durch die Zentralbohrung 9 hindurchpasst, zum anderen kann hierdurch auch eine einfache Handhabung bei der Höhenänderung des Rührelements erreicht werden.

Das Deckelelement 8 ist universal einsetzbar und kann auf unterschiedliche Medienbehälter 8 aufgesetzt werden. Hierzu weist es mehrere konzentrische Randkanten 10 auf, welche jeweils einen definierten Verschlussrand für eine bestimmte, übliche Medienbehältergröße darstellt. So können beispielsweise Randkanten 10 passend für unterschiedlich große Flaschenöffnungen von Babytrinkflaschen und für Gläschennahrung an einem gemeinsamen Deckelelement 8 bereitgehalten werden, so dass ein Deckelelement 8 mehr oder weniger universell einsetzbar ist.

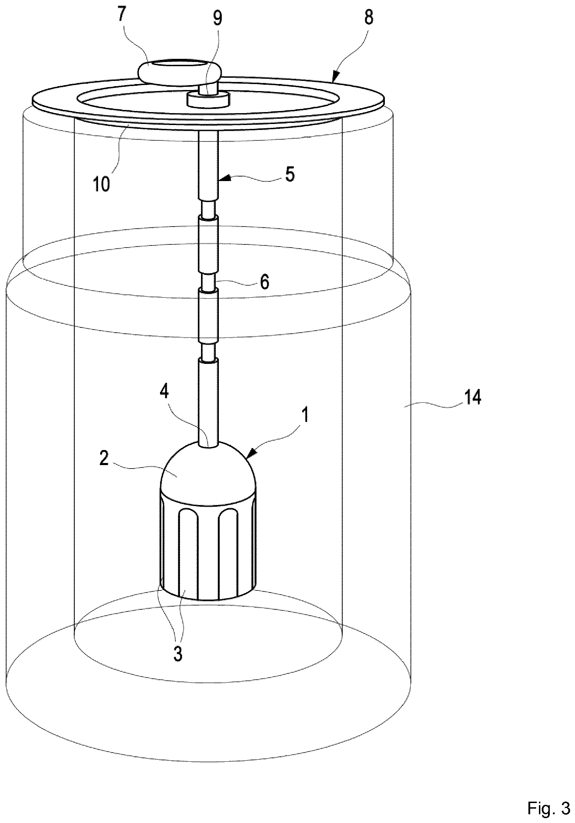

Deutlich wird dies nochmals mit Blick auf die Figur 3, in welcher das Deckelelement 8 auf einem Medienbehälter 14 aufgesetzt ist. Das Rührelement 1 kann über den Trägerstab 5 im Verhältnis zu dem Deckelelement 8 angehoben werden, um das Rührelement innerhalb des Medienbehälters 14 möglichst mittig, nicht im direkten Bodenbereich, anzuordnen. So wird eine schnelle und gleichmäßige Erwärmung und Durchmischung von der Mitte des Medienbehälters 14 aus erreicht.

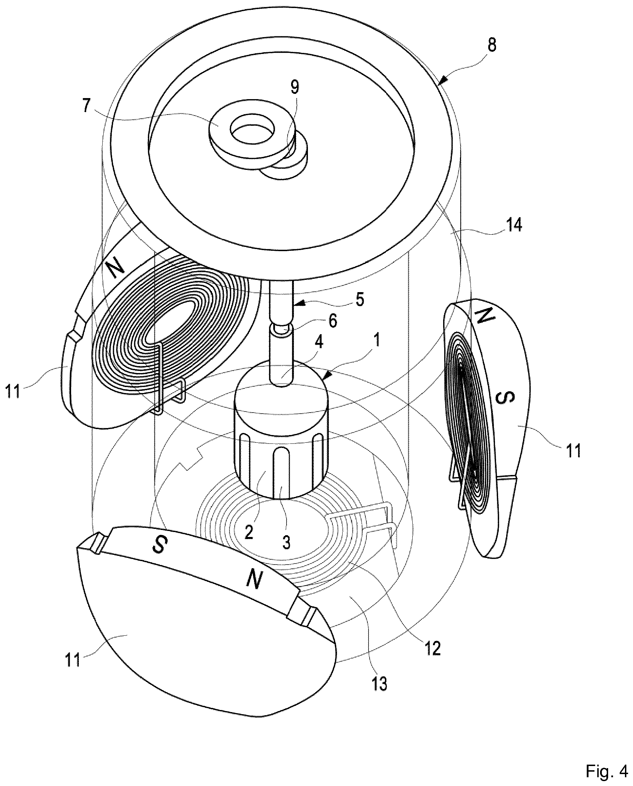

In Figur 4 schließlich ist gezeigt, wie der Medienbehälter 14 mit dem eingeführten Rührelement 1 in dem auch hier ausgeblendeten Behälter aufgenommen ist. Die Rotationsinduktionsspulen 11 erzeugen ein Drehfeld, welches das Rührelement 1 in Rotation versetzt. Eine im Boden 13 des Bechers angeordnete Heizinduktionsspule 12 erhitzt hingegen die Induktionselemente 3 des Rührelements 1 durch die Wand des Medienbehälters 14 hindurch. Das Rührelement 1 wiederum ist in dem Medienbehälter 14 über den am Deckelelement 8 aufgehängten Trägerstab 5 mittig aufgehängt, so dass eine Erwärmung und eine Durchmischung möglichst gleichmäßig durchgeführt werden kann. Die an dem Deckelelement 8 herausschauende Verliersicherung 7 sorgt dafür, dass das Rührelement 1 nicht in den Medienbehälter 14 hinabfällt.

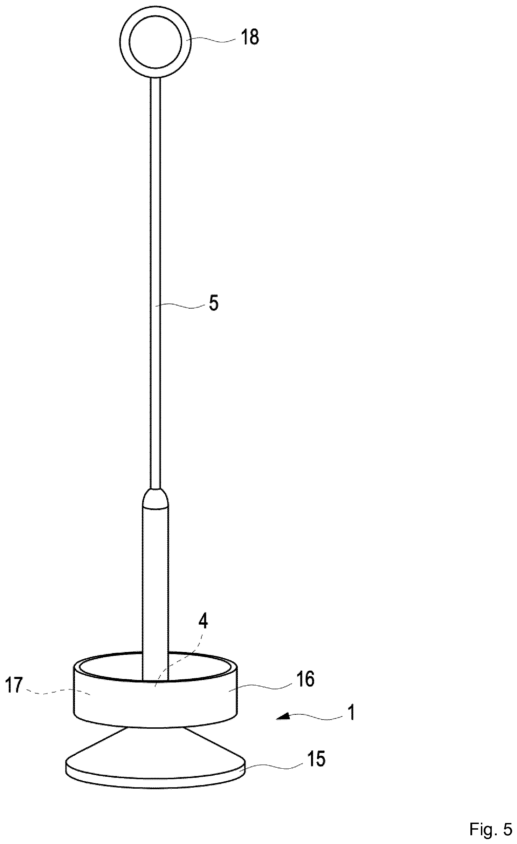

Eine alternative Ausgestaltung nach Figur 5 sieht vor, dass der Trägerstab 5 aufrecht auf einem Standfuß 15 aufgerichtet ist und somit auf ein Deckelelement 8 verzichten kann. Vielmehr kann der Standfuß als Saugnapf ausgestaltet sein, um die Anordnung am Boden eines Medienbehälters 14 zu fixieren. Mit einem optionalen Griffelement 18 kann die Anordnung als Ganzes aus dem Medienbehälter entnommen werden, ohne diesen zu drehen oder zunächst ganz zu entleeren.

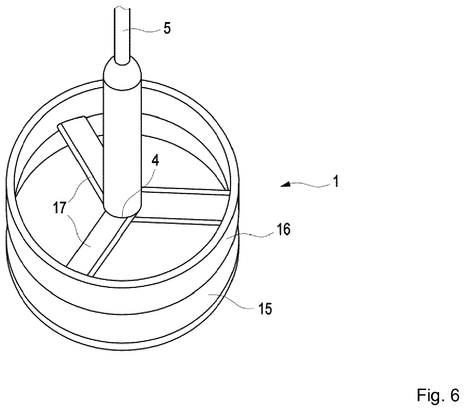

Um den Trägerstab 5 herum gleitet auf einem Drehlager 4 ein Außenring 16, welcher mit dem Drehlager 4 über drei Flügel 17 verbunden ist. dies kann besser in der Figur 6 erkannt werden, welche einen steileren Betrachtungswinkel wählt.

Aufgrund eines veränderlichen Magnetfelds um das Rührelement 1 herum werden die Flügel und/oder wird der Außenring in Rotation um den Trägerstab 5 herum versetzt und die Flügel durchmischen das in dem Medienbehälter 14 enthaltene Medium. In einer solchen Ausgestaltung kann insbesondere das veränderliche Magnetfeld durch einen mithilfe eines hier nicht gezeigten Stellmotors in Drehung versetzten Elektromagneten oder Permanentmagneten erzeugt werden.

Vorstehend beschrieben ist somit ein Babykostwärmer, welcher durch ein gegenüber dem Boden erhöht angeordnetes Rührelement eine effiziente und schnelle Erwärmung des in einem Medienbehälter aufgenommenen Mediums, insbesondere Babykost, ermöglicht.

### BEZUGSZEICHENLISTE

- 1: Rührelement
- 2: Kunststoffkörper
- 3: Induktionselement
- 4: Drehlager
- 5: Trägerstab
- 6: Rastnuten
- 7: Verliersicherung
- 8: Deckelelement
- 9: Zentralbohrung
- 10: Randkante
- 11: Rotationsinduktionsspule
- 12: Heizinduktionsspule
- 13: Boden
- 14: Medienbehälter
- 15: Standfuß
- 16: Außenring
- 17: Flügel
- 18: Griffelement

## Patentansprüche

1. Babykostwärmer umfassend einen Becher mit einer Induktionsspule zur Erzeugung eines Magnetfelds in dem Becher sowie mit einem in dem Becher drehbar aufgenommenen Rührelement (1) zum gleichzeitigen Durchmischen und Erwärmen eines in dem Becher aufgenommenen Medienbehälters (14) mit einem flüssigen oder pastösen Medium, wobei das Rührelement (1) induktiv beheizt und induktiv oder mithilfe rotierender Permanentmagnete in Rotation versetzt wird,
**dadurch gekennzeichnet, dass** das Rührelement (1) sowohl von einem Boden (13) des Bechers als auch von einem Boden des Medienbehälters (14) beabstandet, nämlich erhöht, gelagert ist.

2. Babykostwärmer gemäß Anspruch 1, **dadurch gekennzeichnet, dass** das Rührelement (1) über einen Trägerstab (5) mit einem Deckelelement (8) verbunden ist, wobei der Trägerstab (5) gegenüber dem Deckelelement (8) und/oder das Rührelement (1) gegenüber dem Trägerstab (5) drehbar gelagert ist, und/oder der Trägerstab (5) mehrteilig gebildet ist und Teile des Trägerstabs (5) gegeneinander drehbar gelagert sind.

3. Babykostwärmer gemäß Anspruch 2, **dadurch gekennzeichnet, dass** der Trägerstab (5) durch eine Zentralbohrung (9) im Deckelelement (8) durch dieses hindurchgeführt ist und eine Verliersicherung (7) aufweist.

4. Babykostwärmer gemäß Anspruch 3, **dadurch gekennzeichnet, dass** der Trägerstab (5) mehrere voneinander in Längsrichtung des Trägerstabs (5) beabstandete Rastelemente aufweist, welche mit Gegenrastelementen im Bereich der Zentralbohrung (9) des Deckelelements (8) zusammenwirken.

5. Babykostwärmer gemäß Anspruch 4, **dadurch gekennzeichnet, dass** der Trägerstab (5) aus Silikon oder anderen elastomeren Materialien hergestellt ist und mehrere Rastnuten (6) zur Verklemmung mit der Zentralbohrung (9) des Deckelelements (8) aufweist.

6. Babykostwärmer gemäß einem der vorhergehenden Ansprüchen, **dadurch gekennzeichnet, dass** das Deckelelement (8) eine Mehrzahl konzentrischer Randkanten (10) aufweist, welche jeweils mit den Rändern unterschiedlich großer in dem Becher aufgenommener Medienbehälter (14) zusammenwirken.

7. Babykostwärmer gemäß Anspruch 1, **dadurch gekennzeichnet, dass** das Rührelement (1) über einen Trägerstab (5) mit einem Standfuß (15) verbunden ist, wobei das Rührelement (1) gegenüber dem Trägerstab (5) drehbar gelagert ist.

8. Babykostwärmer gemäß Anspruch 7, **dadurch gekennzeichnet, dass** der Standfuß (15) als Saugnapf zur Befestigung an dem Boden des Medienbehälters (14) ausgebildet ist.

9. Babykostwärmer gemäß einem der vorhergehenden Ansprüche, **dadurch gekennzeichnet, dass** dem Becher wenigstens eine Heizinduktionsspule (12) zum kontaktlosen Erhitzen des Rührelements (1) im Bereich des Bodens (13) zugeordnet ist.

10. Babykostwärmer gemäß einem der vorhergehenden Ansprüche, **dadurch gekennzeichnet, dass** dem Becher wenigstens eine Rotationsinduktionsspule (11) zur Erzeugung eines eine Rotation des Rührelements (1) erregenden magnetischen Drehfelds im Bereich von Becherwänden des Bechers zugeordnet sind.

11. Babykostwärmer gemäß einem der vorhergehenden Ansprüche, **dadurch gekennzeichnet, dass** das Rührelement (1) ein Kunststoffkörper (2) ist, welchem eine Mehrzahl rings um den Umfang des Kunststoffkörpers (2) verteilter ferromagnetischer Induktionselemente (3) zugeordnet sind.

12. Babykostwärmer gemäß einem der Ansprüche 1 biss 11, **dadurch gekennzeichnet, dass** das Rührelement (1) einen Außenring (16) aufweist, welcher über einen oder mehrere Flügel (17) mit einem gleitend auf dem Trägerstab (5) aufgenommenen Drehlager verbunden ist, wobei der Außenring (16) und/oder der wenigstens eine Flügel (17) magnetisch ist.

## Claims

1. Baby food warmer comprising a cup having an induction coil for generating a magnetic field in the cup and having a stirring element (1) rotatably received in the cup for simultaneous mixing in and heating of a media container (14) which is received in the cup and has a liquid or pasty medium, the stirring element (1) being inductively heated and being rotated inductively or with the aid of rotating permanent magnets, **characterized in that** the stirring element (1) is mounted at a distance, in particular so as to be elevated, from both a base (13) of the cup and a base of the media container (14).

2. Baby food warmer according to claim 1, **characterized in that** the stirring element (1) is connected to a cover element (8) via a carrier rod (5), the carrier rod (5) being rotatably mounted relative to the cover element (8) and/or the stirring element (1) being rotatably mounted relative to the carrier rod (5), and/or the carrier rod (5) being formed in multiple parts and parts of the carrier rod (5) being rotatably mounted relative to one another.

3. Baby food warmer according to claim 2, **characterized in that** the carrier rod (5) is passed through a central bore (9) in the cover element (8) and has an anti-loss means (7).

4. Baby food warmer according to claim 3, **characterized in that** the carrier rod (5) has a plurality of latching elements which are mutually spaced in the longitudinal direction of the carrier rod (5) and which interact with mating latching elements in the region of the central bore (9) of the cover element (8).

5. Baby food warmer according to claim 4, **characterized in that** the carrier rod (5) is made of silicone or other elastomeric materials and has a plurality of latching grooves (6) for clamping with the central bore (9) of the cover element (8).

6. Baby food warmer according to any of the preceding claims, **characterized in that** the cover element (8) has a plurality of concentric peripheral edges (10) which each interact with the edges of differently sized media containers (14) received in the cup.

7. Baby food warmer according to claim 1, **characterized in that** the stirring element (1) is connected to a stand (15) via a carrier rod (5), the stirring element (1) being rotatably mounted relative to the carrier rod (5).

8. Baby food warmer according to claim 7, **characterized in that** the base (15) is designed as a suction cup for attachment to the base of the media container (14).

9. Baby food warmer according to any of the preceding claims, **characterized in that** at least one heating induction coil (12) for contactless heating of the stirring element (1) is associated with the cup in the region of the base (13).

10. Baby food warmer according to any of the preceding claims, **characterized in that** at least one rotation induction coil (11) for generating a magnetic rotary field exciting a rotation of the stirring element (1) is associated with the cup in the region of cup walls of the cup.

11. Baby food warmer according to any of the preceding claims, **characterized in that** the stirring element (1) is a plastics body (2) with which a plurality of ferromagnetic induction elements (3) are associated which are distributed around the circumference of the plastics body (2).

12. Baby food warmer according to any of claims 1 to 11, **characterized in that** the stirring element (1) has an outer ring (16) which is connected via one or more wings (17) to a pivot bearing slidably received on the carrier rod (5), the outer ring (16) and/or the at least one wing (17) being magnetic.

## Revendications

1. Réchauffeur d'aliments pour bébés comprenant un gobelet comportant une bobine d'induction destinée à générer un champ magnétique dans le gobelet ainsi qu'un élément d'agitation (1) logé de manière rotative dans le gobelet et destiné à mélanger et à chauffer simultanément un récipient de milieu (14) qui est logé dans le gobelet et qui comporte un milieu liquide ou pâteux, l'élément d'agitation (1) étant chauffé par induction et étant mis en rotation par induction ou à l'aide d'aimants permanents rotatifs,
**caractérisé en ce que** l'élément d'agitation (1) est monté de façon à être espacé, à savoir surélevé, aussi bien par rapport à une base (13) du gobelet que par rapport à une base du récipient de milieu (14).

2. Réchauffeur d'aliments pour bébés selon la revendication 1, **caractérisé en ce que** l'élément d'agitation (1) est relié à un élément de couvercle (8) par l'intermédiaire d'une tige de support (5), la tige de support (5) étant montée de manière rotative par rapport à l'élément de couvercle (8) et/ou l'élément d'agitation (1) étant monté de manière rotative par rapport à la tige de support (5), et/ou la tige de support (5) étant formée en plusieurs parties et des parties de la tige de support (5) étant montées rotatives les unes par rapport aux autres.

3. Réchauffeur d'aliments pour bébés selon la revendication 2, **caractérisé en ce que** la tige de support (5) passe à travers un trou central (9) dans l'élément de couvercle (8) et présente une sécurité anti-perte (7).

4. Réchauffeur d'aliments pour bébés selon la revendication 3, **caractérisé en ce que** la tige de support (5) présente plusieurs éléments de verrouillage espacés les uns des autres dans la direction longitudinale de la tige de support (5), lesquels coopèrent avec des éléments de contre-verrouillage dans la zone du trou central (9) de l'élément de couvercle (8).

5. Réchauffeur d'aliments pour bébés selon la revendication 4, **caractérisé en ce que** la tige de support (5) est constituée de silicone ou d'autres matériaux élastomères et présente plusieurs rainures de verrouillage (6) pour le serrage avec le trou central (9) de l'élément de couvercle (8).

6. Réchauffeur d'aliments pour bébés selon l'une des revendications précédentes, **caractérisé en ce que** l'élément de couvercle (8) présente une pluralité d'arêtes de bord concentriques (10), lesquelles coopèrent respectivement avec les bords de récipients de milieu (14) de tailles différentes et logés dans le gobelet.

7. Réchauffeur d'aliments pour bébés selon la revendication 1, **caractérisé en ce que** l'élément d'agitation (1) est relié à un pied d'appui (15) par l'intermédiaire d'une tige de support (5), l'élément d'agitation (1) étant monté rotatif par rapport à la tige de support (5).

8. Réchauffeur d'aliments pour bébés selon la revendication 7, **caractérisé en ce que** le pied d'appui (15) est conçu sous forme de ventouse pour une fixation à la base du récipient de milieu (14).

9. Réchauffeur d'aliments pour bébés selon l'une des revendications précédentes, **caractérisé en ce qu'**au moins une bobine d'induction de chauffage (12) destinée au chauffage sans contact de l'élément d'agitation (1) dans la zone de la base (13) est associée au gobelet.

10. Réchauffeur d'aliments pour bébés selon l'une des revendications précédentes, **caractérisé en ce qu'**au moins une bobine d'induction de rotation (11) destinée à générer un champ magnétique rotatif entraînant une rotation de l'élément d'agitation (1) est associée au gobelet dans la zone de parois du gobelet.

11. Réchauffeur d'aliments pour bébés selon l'une des revendications précédentes, **caractérisé en ce que** l'élément d'agitation (1) est un corps en plastique (2) auquel est associée une pluralité d'éléments d'induction ferromagnétiques (3) répartis sur la circonférence du corps en plastique (2).

12. Réchauffeur d'aliments pour bébés selon l'une des revendications 1 à 11, **caractérisé en ce que** l'élément d'agitation (1) présente une bague extérieure (16) qui est reliée à un palier rotatif logé de manière coulissante sur la tige de support (5) par l'intermédiaire d'une ou de plusieurs ailes (17), la bague extérieure (16) et/ou l'au moins une aile (17) étant magnétiques.
